Europäisches Patentamt

European Patent Office

Office européen des brevets

(11) Veröffentlichungsnummer: **0 429 050 A1**

## (12) EUROPÄISCHE PATENTANMELDUNG

(21) Anmeldenummer: **90122118.4**

(51) Int. Cl.5: **A01G 9/10**

(22) Anmeldetag: **20.11.90**

(30) Priorität: **23.11.89 DE 3938738**

(43) Veröffentlichungstag der Anmeldung:
**29.05.91 Patentblatt 91/22**

(84) Benannte Vertragsstaaten:
**BE DE DK FR GB IT NL**

(71) Anmelder: **Pfeffer, Ulrich**
**Zwierenstrasse 2**
**W-7347 Unterböhringen(DE)**

(72) Erfinder: **Pfeffer, Ulrich**
**Zwierenstrasse 2**
**W-7347 Unterböhringen(DE)**

(74) Vertreter: **Mayer, Friedrich, Dr.**
**Patentanwälte Dr. Mayer & Frank Westliche 24**
**W-7530 Pforzheim(DE)**

(54) **Wegwerftopf zur Aufzucht von Pflanzen.**

(57) Die Wandung des Wegwerftopfes ist aus einem beidseits mit einer Folie (11,11a) aus hochpolymerem Werkstoff beschichteten Papier (Steifigkeitsschicht 10) ausreichender Steifigkeit aufgebaut. Der hochpolymere Werkstoff enthält einen biologisch abbaubaren Stoff in Feinverteilung und ist dadurch für einen biologischen Abbau erschlossen. Durch einen solchen Aufbau der Wandung wird erreicht, daß günstigere Voraussetzungen für eine Rationalisierung der Fertigung sowie der Pflanzenaufzucht vorliegen und daß bei geringem Fertigungsaufwand die Abbauzeit des Wegwerftopfes durch Zersetzung in Anpassung an die spezifische Anzuchtzeit der Pflanze in höherem Grade vorbestimmbar ist.

FIG. 1

## WEGWERFTOPF ZUR AUFZUCHT VON PFLANZEN.

Die Erfindung betrifft einen mit feuchter Kulturerde füllbaren Wegwerftopf zur Aufzucht und/oder zur Kultur von Pflanzen, dessen Wandung zu einem wesentlichen Teil aus Papier oder einem papierähnliichen, also biologisch abbaubaren Material sowie aus wenigstens einer weiteren, die Wasserdichtigkeit der Wandung über einen begrenzten Zeitraum gewährleistenden Werkstoffkomponente aufgebaut ist, welcher Topf an seiner Basis mit Löchern versehen ist, über welche die Kulturerde des Topfes Wasser aufnehmen bzw. abgeben kann.

Ein bekannter Wegwerftopf dieser Art besteht aus starkem papierähnlichen organischen Material aus Holzbrei, wiederverwendetem Papier, Torf oder Textilfasern, das Ganze mit reinem Bitumen angereichert. Bei einem solchen Mischwerkstoff ist es nicht auszuschließen, das hochempfindliche Kulturpflanzen durch den Bitumenanteil (Teeröle) negativ beeinflußt werden. Der Topf wird aus entsprechenden Zuschnitten aus Flachmaterial hergestellt. Die beispielsweise zu einem Rundtopf gebogene Wand wird an der Nahtlinie durch Metallklammern zusammengefügt. Der den Boden bildende Teil (Bodenteil) des Zuschnittes ist über einen Steg mit der die Wandung bildenden Teil des Zuschnittes verbunden. Bei Fertigung des Topfes wird der Bodenteil in Bodenposition umgeklappt und mittels hochgebogener Lappen mit der zum Topf gebogenen Wand mittels Metallklammern verbunden. Feuchtigkeit kann durch die Schlitze am äußeren offenen Bodenrand eindringen bzw. abgeführt werden. Bei relativ ge ringem Bitumenanteil hält der Topf ein Jahr auf einer Arbeitsplatte. Bei der Verrottung zersetzt sich die Papierkomponente. Die Bitumenkomponente bleibt jedoch als strukturloses Material zurück. Der bekannte Topf ist einer rationellen Serienfertigung schwer zugänglich, ebenso einer maschinellen Handhabung bei der Abfüllung mit Erde mittels Füllautomaten, weil ein oberer Rand, mit dessen Hilfe Becher von einem größeren Stapel periodisch zur Erdabfüllung abgezogen werden können fehlt bzw. schwer anformbar ist und die Oberfläche der Wandung einen relativ hohen Reibungskoeffizienten aufweist, der den Einsatz von Füllautomaten erschwert oder gar unmöglich macht (Firmenprospekt Fyba "Der schwarze Kurzzeittopf").

Ferner ist es bekannt, Wegwerftöpfe für die Pflanzenaufzucht bzw. Pflanzenkultur aus verrottbaren, wasserdurchlässigen und für das Eindringen von Wurzelwerk ausreichend porösen Mischungen von organischen Faserstoffen und hochpolymeren Werkstoffen herzustellen (EP 0 082 653 B1; DE-OS 1 611 734).

Seit etwa eineinhalb Jahrzehnten sind der Fachwelt auch biologisch abbaubare hochpolymere Werkstoffe bekannt, insbesondere aus Polyäthylen mit eingearbeiteter Stärke und mit zu Peroxiden oxidierbaren ungesättigten Ölen als Zusatz in Feinverteilung (GB 1 485 833; vergl. auch GB 1 487 050).

Die Verwendung von schichtweise aufgebauten Wandungen bei Schalengruppen mit mehreren parallelen Schalenreihen für die Kultur von Pflanzen ist aus der AT-PS 352 461 bekannt. Charakteristisch für den Aufbau dieser Wandungen ist eine mittlere, aus verrottbarem Papiermaterial bestehende Schicht und beidseits auf diese fest aufgebrachte poröse Fasertuchschicht. Als wesentliches Charakteristikum dieses Schichtaufbaus wird die Vermeidung von kunststoffbefestigtem Papier und von 'Kunststoffhäutchen' (a.a.0. S.2, Z. 10) und die Eigenschaft des Fasertuches angesehen, daß ein äußerst poriger Faserstoff das Durchwachsen der Wurzeln ermöglicht (a.a.0. S.4, Z. 28). Die neuere Entwicklung geht gezielt in Richtung der Herstellung von Wegwerftöpfen aus Recyclingpapier. Ein Problem ist hierbei die verhältnismäßig rauhe Oberfläche als Hemmnis für eine maschinelle Handhabung, insbesondere beim Füllen ("Deutscher Gartenbau" 26/1990 S. 1698-1701 und Gartenbaureport 7/90 S. 10,11).

Schließlich ist auch bekannt, Papier mit Folien beidseits zu beschichten (kaschieren).

Hiervon ausgehend liegt der Erfindung die Aufgabe zugrunde, ein Wegwerftopf der eingangs genannten Gattung derart weiterzubilden, daß bessere Voraussetzungen für eine kostengünstige Fertigung und dank eines sehr niedrigen Reibungskoeffizienten der Topfwandung und dank einer hohen Widerstandsfähigkeit gegen mechanische Beanspruchungen bei Feuchtigkeit und Nässe-für eine Rationalisierung der Abfüllung und für Transportarbeiten, insbesondere beim Einsatz maschineller Anlagen und Automaten vorliegen, wobei die Abbauzeit in Anpassung an die spezifische Anzucht und /oder Kulturzeit der Pflanze in hohem Grade vorbestimmbar ist und als Endprodukte eines biologischen Abbaus im wesentlichen nur die Stoffwechselprodukte der Mikroorganismen (Bakterien, Pilze und dergleichen) wie Kohlendioxid, Wasser usw. vorliegen.

Diese Aufgabe wird erfindungsgemäß durch die im Kennzeichen des Patentanspruchs 1 genannten Merkmale gelöst.

Ein Wegwerftopf mit diesen Merkmalen weist auch bei Feuchtigkeit eine hohe Festigkeit, Standfestigkeit und Stabilität auf, wodurch Verlade- und Transportarbeiten sowie die maschinelle Abfüllung mit Substrat wesentlich begünstigt wird. In Fällen, in denen der Wegwerftopf für eine längere Benutzungszeit von z.B. 1 bis 2 Jahre ausgelegt ist, ist in der Endphase der Benutzung ein Bewuchs von alten Pilzen und dergleichen kaum zu verzeichnen.

Bei der erfindungsgemäßen Lösung kann die Abbauzeit des Topfes in sehr weiten zeitlichen Grenzen also z.B. zwischen wenigen Monaten und mehreren Jahren weitgehend festgelegt werden, indem die Folien entsprechend unterschiedliche Anteile z.B. an Stärke und ungesättigten Ölen enthalten und/oder das Verhältnis zwischen der Dicke der Folien und der papiernen Steifigkeitsschicht entsprechend variiert wird bzw. Stanzkanten der Wandungszuschnitte mehr oder weniger offen sind. Im Vergleich zu Behältnissen, die vollständig aus abbaubaren hochpolymeren Werkstoffen (Thermoplasten) mit entsprechenden Zusätzen bestehen, kann die Abbauzeit dank des spezifischen Schichtaufbaus der Topfwandung stark minimiert werden.

Sobald nämlich die Feuchtigkeit in die papierene Steifigkeitsschicht des Topfes z.B. über die Stanz- bzw. Schnittkanten des Schichtmaterials und/oder nur eine Verletzung der Folie und/oder über abbaubedingte Folienbrüche gelangt, liegen praktisch die gesamten Innen- und Außenflächen beider Folien für den Angriff der Mikroben frei. Aus diesem Grunde besteht auch die Möglichkeit, durch Zerstückelung der ausgebrauchten Töpfe z.B. mit Hilfe eines Zerkleinerers, einen extrem raschen Abbau zu erzielen. Insoweit können die ausgebrauchten Töpfe gewissermaßen als umweltfreundliches Kompost-Rohmaterial behandelt werden (Dicke der Steifigkeitsschicht z.B. 0,17-0,25 mm; der Folie z.B. 0,018-0,032 mm).

Der Begriff Papier in obigem Sinne ist im weitesten Sinne zu verstehen und umfaßt insoweit Pappe, Pappmaché und andere papierähnliche Materialien. Durch eine Weiterbildung nach Anspruch 2 wird erreicht, daß der Boden des Wegwerftopfes mit seinen Löchern in derart geringem Abstand von der Stellfläche befindet, daß auch bei vorliegender geringer Wassermenge auf der Stellfläche Feuchtigkeit in die Kulturerde eindringen kann.

Ein besonderer Vorteil besteht darin, daß der Wegwerftopf erstmals mit Gebrauchsanweisungen, Werbebildern, Werbesprüchen und dergleichen bedruckt werden kann, so das der Topf auch mit einem verkaufsfördernden Design angeboten werden kann. Für eine manuelle, insbesondere aber eine maschinelle Füllung der Töpfe in Füll automaten ist der durch die äußere Folie bedingte niedrige Reibungskoeffizient von Bedeutung.

Eine kostengünstige Fertigung des Wegwerftopfes ist nicht zuletzt deshalb möglich, weil die Dreischicht-Wandung für die Herstellung des Topfes als Flachmaterial mit den gleichen maschinellen Anlagen hergestellt werden kann, die für die Kaschierung von Papier mit Folien eingesetzt werden. Dasselbe gilt für die maschinelle Herstellung des Topfes selbst aus dem maschinell hergestellten Dreischicht-Flachmaterial. Denn hierüber sind die für die Fertigung von Wegwerftrinkbechern eingesetzten maschinellen Anlagen brauchbar.

Nachstehend wird die Erfindung anhand der Zeichnung an einem Ausführungsbeispiel erläutert.

Es zeigen:

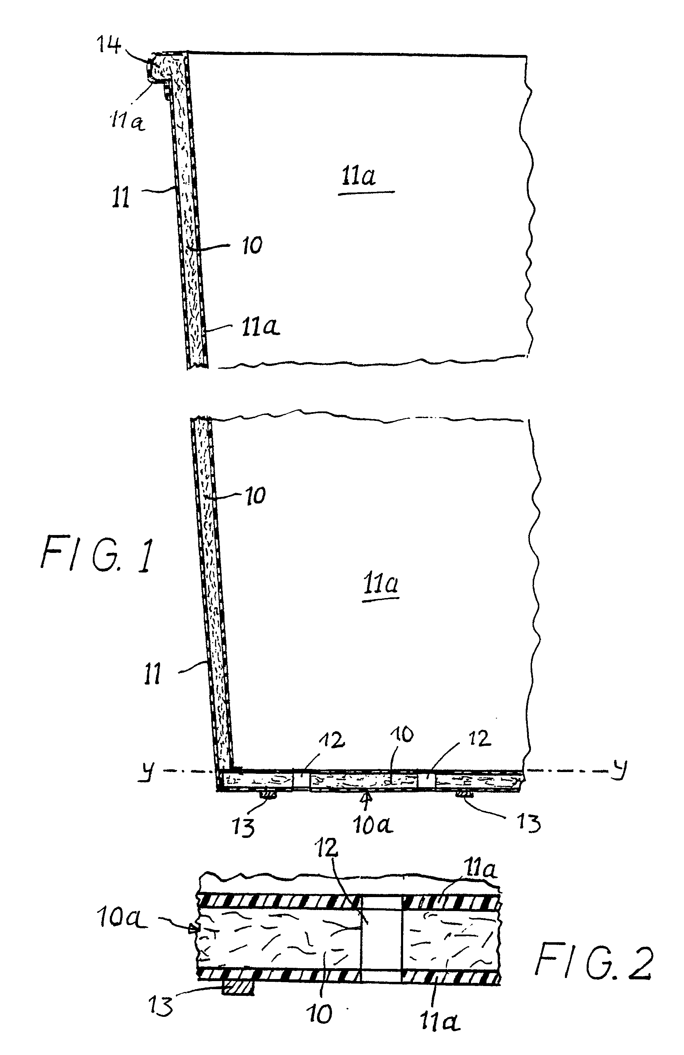

Fig. 1 Den Topf im Vertikalschnitt durch die Symmetrieebene in stark vergrößerter Darstellung und

Fig.2 einen vergrößerten Ausschnitt aus Fig. 1.

Die Wandung des mit feuchter Kulturerde füllbaren Wegwerftopfes ist aus einem beidseits mit einer Folie 11,11a auch hochpolymerem Werkstoff beschichteten Papier (Steifigkeitsschicht 10) ausreichender Steifigkeit aufgebaut. Der hochpolymere Werkstoff ist ein Thermoplast, vorzugsweise Polyähtylen, der Stärkekörner und ungesättigte Öle in Feinverteilung enthält, welche letztere zu einem Peroxid oxidierbar sind. Aufgrund der genannten Zusätze sind die Folien durch Mikroorganismen biologisch abbaubar. Die Mikroorganismen wachsen, ausgehend von der Oberfläche, bis in die Mitte der Folie. Dadurch ergibt sich eine Schwächung der Folie und eine sehr intensive Verteilung der Mikroorganismen. Zu diesem Zeitpunkt wird das in der Folie enthaltene ungesättigte Öl zu Peroxiden oxidiert, welche die Polymerketten angreifen und zerschneiden. Auch Polypropylen hat sich als Grundlage für die Herstellung der Folie als geeignet erwiesen. Der mit Standfüßen von etwa 2mm Höhe versehene Boden des Topfes liegt in einer Ebene y-y, in welcher die Topfwandung endet. Im zeichnerisch dargestellten Ausführungsbeispiel ist der Wegwerftopf aus zwei Zuschnitten zusammengefügt, von welchen eine den Boden 10a und der andere die Wandung bildet. Die Löcher 12 im Boden sind durch Ausstanzungen gebildet. Die Stanzkanten sind mit einem das Eindringen von Feuchtigkeit zwischen den Folien verhinderndes Imprägnierungsmittel versiegelt. Die beiden aus Polyäthylen oder Polypropylen gebildeten Folien 11,11a der Wandung weisen gleiche Dicke auf. Der radial vorspringende Rand des Topfes kann durch eine Umbördelung oder eine entsprechende Prägung 14 der Steifigkeitsschicht 10 gebildet sein. Im zeichnerischen Ausführungsbeispiel ist der Rand 14 durch die umgeschlagene innere Folie 11a abgedeckt. Die zunächst offenen Stanzkanten sind durch versiegeln mit einem wasserabweisenden Mittel gegen das Eindringen von Feuchtigkeit gesichert. Dies kann beispielsweise durch Tauchen der Töpfe in einem über den Schmelzpunkt erwärmten Paraffin geschehen. Die Dicke der Folie kann etwa ein Achtel der Dicke der papierenen Steifigkeitsschicht betragen.

Sowohl die inner Folie 11a als auch die äußere Folie 11 ist durch Wärmeeinwirkung mit der Steifigkeitsschicht 10 verhaftet.

Töpfe mit viereckigem Querschnitt können aus einem einzigen Zuschnitt gefertigt werden. Das gleiche gilt für Rundtöpfe, die einen Boden von quadratischem Grundriß aufweisen.

Abschließend ist darauf hinzuweisen, daß die Wandung 11, 10 11a über Stanzkanten des Schichtmaterials von Anfang an nach Maßgabe der erforderlichen Gebrauchsdauer des Wegwerftopfes für den Zutritt von Feuchtigkeit und somit für den Angriff von Mikroben mehr oder weniger exponiert sein kann, je nachdem, in welchem Ausmaß diese Stanzkanten abgedeckt bzw. imprägniert sind. Dadurch können Stanzkanten des Wegwerftopfes zu einem wesentlichen Element für die Vorbestimmung der erforderlichen Gebrauchsdauer des Wegwerftopes sein. Dies gilt sowohl mit Bezug auf die Stanzkanten der Vertikalwandung des Topfes als auch für den Boden des Topfes auch im Bereich der Löcher, sofern auch für diesen Boden eine Wandung mit dreischichtigem Aufbau vorgesehen ist.

**Ansprüche**

1. Mit feuchter Kulturerde füllbarer Wegwerftopf zur Aufzucht und /oder zur Kultur von Pflanzen, dessen Wandung zu einem wesentlichen Teil aus Papier oder einem papierähnlichen, also biologisch abbaubaren Material sowie aus wenigstens einer weiteren, die Wasserdichtigkeit der Wandung über einen begrenzten Zeitraum gewährleistenden Werkstoffkomponente aufgebaut ist, welcher Topf an seiner Basis mit Löchern versehen ist, über welche die Kulturerde des Topfes Wasser aufnehmen bzw. abgeben kann,
dadurch gekennzeichnet, das die Wandung aus einem beidseits mit einer Folie (11,11a) aus hochpolymerem Werkstoff beschichteten Papier (Steifigkeitsschicht 10) ausreichender Steifigkeit aufgebaut ist, wobei der hochpolymere Werkstoff in an sich bekannter Weise wenigstens einen biologisch abbaubaren Stoff in Feinverteilung enthält.

2. Wegwerftopf nach Anspruch 1, dadurch gekennzeichnet, das sein mit Standfüßchen von etwa 2 mm Höhe versehener Boden(10a) in einer Ebene (y-y) liegt in der die oben mit radial vorspringendem Rand versehene Topfwandung endet.

3. Wegwerftopf nach Anspruch 1 oder 2, dadurch gekennzeichnet, das die Löcher (12) im Boden durch Ausstanzungen gebildet und die Stanzkanten mit einem das Eindringen von Feuchtigkeit zwischen den Folien (11,11a) verhinderndes Imprägnierungsmittel versiegelt sind.

4. Wegwerftopf nach einem der Ansprüche 1 bis 3, dadurch gekennzeichnet, daß die beiden aus Polyäthylen gebildeten Folien (11,11a) der Wandung gleiche Dicke aufweisen.

5. Wegwerftopf nach einem der Ansprüche 2 bis 4, dadurch gekennzeichnet, daß der radial vorspringende Rand durch eine Umbördelung (14) bzw. Prägung der Steifigkeitsschicht (10) der Topfwandung gebildet ist.

6. Wegwerftopf nach einem der Ansprüche 3 bis 5, dadurch gekennzeichnet, daß die Stanzkanten durch Tauchen in einem über den Schmelzpunkt erwärmten Paraffin versiegelt sind.

7. Wegwerftopf nach einem der Ansprüche 4 bis 6, dadurch gekennzeichnet, daß die Dicke der Folien etwa ein Achtel der Dicke der papierenen Steifigkeitsschicht (10) beträgt.

8. Wegwerftopf nach einem der vorhergehenden Ansprüche, dadurch gekennzeichnet, daß er im Falle eines Rundtopfes aus zwei und im Falle eines Vierecktopfes aus einem Zuschnitt gebildet ist, wobei Zuschnitte nach Maßgabe der erforderlichen Gebrauchsdauer mehr oder weniger offene Stanzkanten aufweisen.

9. Wegwerftopf nach einem der vorhergehenden Ansprüche, dadurch gekennzeichnet, daß die Folien (11, 11a) im Gefolge einer Wärmeeinwirkung mit der papierenen Steifigkeitsschicht (10) verhaftet sind.

10. Wegwerftopf nach einem der vorhergehenden Ansprüche, dadurch gekennzeichnet, daß der hochpolymere Werkstoff Stärkekörner und wenigstens ein zu einem Peroxid oxidierbares ungesättigtes Öl in Feinverteilung enthält.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 923 729  (R.C. CLENDINNING)<br>* Spalte 3, Zeilen 16-52; Spalte 8, Zeile 49 - Spalte 10, Zeile 54 *<br>– – – | 1 | A 01<br>G 9/10 |
| Y | | 2,3,5,6,8, 10 | |
| Y | US-A-1 561 824  (H.M. BOEHM)<br>* Das ganze Dokument *<br>– – – | 2 | |
| Y | GB-A-4 936 09  (BRITISH WAXED WRAPPINGS LTD)<br>* Seite 1, Zeilen 24-26; Seite 2, Zeile 104 - Seite 3, Zeile 119; Figuren 1-16 *<br>– – – | 3,6,8 | |
| Y | US-A-4 016 327  (G.J. FUMEI)<br>* Spalte 8, Zeile 17 - Spalte 9, Zeile 12; Figur 1 *<br>– – – | 5,8 | |
| D,Y | GB-A-1 485 833  (COLOROLL LTD)<br>* Ansprüche 1,2,4,10 *<br>– – – | 10 | |
| D,A | EP-A-0 082 653  (WIGGINS TEAPE LTD)<br>* Seite 2, Zeile 4 - Seite 6, Zeile 13 *<br>– – – – – | 3,9 | RECHERCHIERTE SACHGEBIETE (Int. Cl.5)<br><br>A 01 G |

Der vorliegende Recherchenbericht wurde für alle Patentansprüche erstellt

| Recherchenort | Abschlußdatum der Recherche | Prüfer |
|---|---|---|
| Den Haag | 08 Februar 91 | ELSWORTH D.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-

& : Mitglied der gleichen Patentfamilie, übereinstimmendes Dokument